# EUROPEAN PATENT APPLICATION

(11) **EP 4 366 076 A1**
(43) Date of publication of application: **08.05.2024**
(21) Application number: 22889058.8
(22) Date of filing: 10.10.2022
(51) Int. Cl.: H01M 50/627, H01M 50/645, H01M 50/15

(54) **BATTERY COVER PLATE ASSEMBLY, BATTERY CELL, BATTERY AND ELECTRIC DEVICE**

(30) Priority: 04.11.2021 CN 202122683160 U
(71) Applicant: Contemporary Amperex Technology Co., Limited, Ningde, Fujian 352100 (CN)
(72) Inventor: CHEN, Congsheng, Ningde, Fujian 352100 (CN); LIN, Wenfa, Ningde, Fujian 352100 (CN); WEN, Yaoling, Ningde, Fujian 352100 (CN)
(74) Representative: Gong, Jinping
(86) International application number: PCT/CN2022/124438
(87) International publication number: WO 2023/078032

(57) **Abstract**

The present application provides a battery cover plate assembly, including: a cover plate provided with a filling port; and a sealing pin for sealing the filling port; wherein the sealing pin includes a main body portion and a welding portion, and the welding portion is located at a periphery of the main body portion and extends from the main body portion toward an outer circumferential side; and the cover plate is provided with a second recess and a first recess, which are sequentially arranged from the inside to the outside at a periphery of the filling port, the main body portion is located in the second recess, and the welding portion is welded to a bottom surface of the first recess. According to the present application, the main body portion is located in the second recess, and the welding portion is welded to the bottom surface of the first recess. The second recess is configured to receive the electrolyte, so as to reduce the residual electrolyte on the bottom surface of the first recess, and the bottom surface of the first recess is welded to the welding portion of the sealing pin, so as to prevent the sealing pin from being welded to the side wall of the filling port, thereby improving the welding sealing performance between the sealing pin and the filling port.

## Description

The present application claims priority to Chinese Patent Application No. 202122683160.9, entitled "BATTERY COVER PLATE ASSEMBLY, BATTERY CELL, BATTERY, AND POWER CONSUMING DEVICE", filed on November 04, 2021, which is incorporated herein by reference in its entirety.

### Technical Field

The present application relates to the field of batteries, and in particular to a battery cover plate assembly, a battery cell, a battery and a power consuming device.

### Background Art

In the existing battery manufacturing process, after a battery cell is filled with electrolyte, a filling port needs to be sealed with a sealing pin. However, there is a problem of electrolyte leakage of the battery cell during actual use. Therefore, the electrolyte leakage of battery cells has become an urgent problem to be solved.

### Summary of the Invention

### Technical Problem

In view of the above problem, the present application proposes a battery cover plate assembly, in order to solve the above technical problem of electrolyte leakage of a battery cell.

### Solution to Problem

### Technical Solutions

To achieve the above objective, the present application provides a battery cover plate assembly, including: a cover plate provided with a filling port; and a sealing pin for sealing the filling port; wherein the sealing pin includes a main body portion and a welding portion, and the welding portion is located at a periphery of the main body portion and extends from the main body portion toward an outer circumferential side; and the cover plate is provided with a second recess and a first recess, which are sequentially arranged from the inside to the outside at a periphery of the filling port, the main body portion is located in the second recess, and the welding portion is welded to a bottom surface of the first recess.

Further, the diameter of the bottom surface of the first recess is greater than the diameter of the sealing pin.

In the above technical solution, the diameter of the bottom surface of the first recess is greater than the diameter of the sealing pin, which facilitates the welding of the welding portion to the bottom surface of the first recess, so as to prevent the affection on the welding quality due to the welding seam falling on the edge of the first recess.

Further, the depth of the first recess is greater than the thickness of the welding portion.

In the above technical solution, the main body portion is accommodated in the second recess, and the depth of the first recess is greater than the thickness of the welding portion, so that the top of the sealing pin is lower than an upper surface of the cover plate, reducing the affection on the sealing performance of the sealing pin by impact.

Further, a buffer portion is provided between the main body portion and the welding portion, and the buffer portion is arched in a thickness direction of the main body portion.

In the above technical solution, the buffer portion can absorb the stress generated during welding of the welding portion, so as to avoid the sealing failure of the sealing pin due to the welding stress.

Further, the buffer portion is arched from the main body portion toward the second recess.

In the above technical solution, the buffer portion is arched from the main body portion toward the second recess, so that the buffer portion is located in the second recess, which achieves a limiting effect when the sealing pin is aligned with the second recess so as to facilitate the alignment of the sealing pin during mounting, and the buffer portion being located in the second recess can avoid the deformation of the buffer portion by impact or the sealing failure of the sealing pin.

Further, a side wall of the second recess is an inclined surface, and the buffer portion has gaps from the inclined surface and a bottom surface of the second recess.

In the above technical solution, the side wall of the second recess is an inclined surface, which can avoid interference with the buffer portion; and the buffer portion has gaps from the inclined surface and the bottom surface of the second recess, which can ensure that the welding portion is in effective contact with the bottom surface of the first recess, and is also conducive to discharge of the vapor generated by the electrolyte during welding to the outside via the gaps, thereby ensuring the welding sealing performance of the sealing pin.

Further, one or more welding seams are welded between the welding portion and the bottom surface of the first recess.

In the above technical solution, more than one welding seam is welded between the welding portion and the welding surface, which can improve the welding sealing performance between the sealing pin and the filling port.

Further, the bottom surface of the first recess is a flat surface; or
the bottom surface of the first recess is an inclined surface, the inclined surface is inclined from high to low toward the filling port, and the bottom surface of the welding portion is attached to the inclined surface.

Further, an angle of the bottom surface of the first recess with respect to the horizontal plane is 0° to 10°.

In order to solve the above technical problem, the present application further provides another technical solution:
a battery cell, including: a shell; an electrode assembly arranged in the shell; and a cover plate assembly, which is the battery cover plate assembly as described in any one of the above technical solutions and is connected to the shell in a sealing manner.

The present application further provides another technical solution:
a battery, including: the battery cell as described in the above technical solution; and a case configured to accommodate the battery cell.

The present application further provides another technical solution:
a power consuming device, including the battery as described in the above technical solution for supplying electric energy.

Compared with the prior art, in the above technical solutions, a second recess and a first recess are sequentially arranged from the inside to the outside at the periphery of the filling port, the main body portion is located in the second recess, and the welding portion is welded to the bottom surface of the first recess. The second recess is configured to receive the electrolyte, so as to reduce the residual electrolyte on the bottom surface of the first recess, and the bottom surface of the first recess is welded to the welding portion of the sealing pin, so as to prevent the sealing pin from being welded to the side wall of the filling port, thereby improving the welding sealing performance between the sealing pin and the filling port.

The above description is only an overview of the technical solutions of the present application. In order to more clearly understand the technical means of the present application to implement same according to the contents of the description, and in order to make the above and other objectives, features and advantages of the present application more obvious and understandable, specific implementations of the present application are exemplarily described below.

### Beneficial Effects of the Invention

### Beneficial Effects

In the above technical solutions, a second recess and a first recess are sequentially arranged from the inside to the outside at the periphery of the filling port, the main body portion is located in the second recess, and the welding portion is welded to the bottom surface of the first recess. The second recess is configured to receive the electrolyte, so as to reduce the residual electrolyte on the bottom surface of the first recess, and the bottom surface of the first recess is welded to the welding portion of the sealing pin, so as to prevent the sealing pin from being welded to the side wall of the filling port, thereby improving the welding sealing performance between the sealing pin and the filling port.

### Brief Description of the Drawings

### Brief Description of the Drawings

Various other advantages and benefits will become apparent to those of ordinary skill in the art upon reading the following detailed description of the optional implementations. The accompanying drawings are merely for the purpose of illustrating the optional implementations, and are not to be construed as limiting the present application. Moreover, like components are denoted by like reference signs throughout the accompanying drawings. In the drawings:
FIG. 1 is a schematic structural diagram of a vehicle according to an embodiment of the present application;
FIG. 2 is a schematic structural diagram of a battery pack according to an embodiment of the present application;
FIG. 3 is a schematic structural diagram of a battery module according to an embodiment of the present application;
FIG. 4 is a schematic structural exploded view of a battery cell according to an embodiment of the present application;
FIG. 5 is a schematic structural diagram of a battery cover plate assembly according to an embodiment of the present application;
FIG. 6 is a schematic diagram of a sealing pin and a cover plate in FIG. 5 when separated;
FIG. 7 is a partial enlarged view of part A in FIG. 5; and
FIG. 8 is a schematic diagram of a sealing pin and a cover plate, when separated, in a battery cover plate assembly according to an embodiment of the present application.

The reference signs in the Detailed Description of Embodiments are as follows:
1 Vehicle, 10 Battery, 11 Controller, 12 Motor;
20 Battery module, 21 Battery cell, 211 Cover plate, 211a Electrode terminal, 212 Shell, 213 Cell assembly, 214 Sealing pin;
2141 Main body portion, 2142 Welding portion, 2143 Buffer portion, 2144 Welding seam;
2111 Filling port, 2112 First recess, 2113 Second recess;
A Angle of bottom surface of first recess with respect to horizontal plane;
30 Case, 301 First portion, 302 Second portion.

### Embodiments of the Invention

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

It should be noted that, unless otherwise specified, the technical terms or scientific terms used in the embodiments of the present application shall have ordinary meanings understood by persons skilled in the art to which the embodiments of the present application belong.

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential" and so on are based on the orientation or position relationship shown in the accompanying drawings and are merely intended to facilitate and simplify the description of the embodiments of the present application, rather than indicating or implying that the apparatus or element considered must have a particular orientation or be constructed and operated in a particular orientation, and therefore not to be construed as limiting the embodiments of the present application.

In addition, the technical terms "first", "second" and so on are used for descriptive purposes only, and cannot be construed as indicating or implying relative importance or implicitly indicating the number of technical features indicated. In the description of the embodiments of the present application, the phrase "a plurality of" means two or more, unless otherwise explicitly and specifically defined.

In the description of the embodiments of the present application, unless otherwise explicitly specified and defined, the technical terms such as "mounting", "connecting", "connection", "fixing", etc. should be understood in a broad sense, for example, they may be a fixed connection, a detachable connection, or an integrated connection; may be a mechanical connection or an electric connection; and may be a direct connection or an indirect connection by means of an intermediate medium, or may be internal communication between two elements or interaction between the two elements. For those of ordinary skill in the art, the specific meanings of the above terms in the embodiments of the present application can be understood according to specific situations.

In the description of the embodiments of the present application, unless otherwise explicitly specified and defined, a first feature being "above" or "below" a second feature may be direct contact between the first feature and the second feature, or indirect contact between the first feature and the second feature by means of an intermediate medium. Moreover, the first feature being "on", "above", and "over" the second feature may be the first feature being directly above or obliquely above the second feature, or simply mean that the first feature is at a higher level than the second feature. The first feature being "under", "below" and "underneath" the second feature may be the first feature being right below or obliquely below the second feature, or only means that the level height of the first feature being less than that of the second feature.

After the secondary filling of the lithium-ion battery, in order to ensure the negative pressure environment in the shell to prevent external gas and moisture from entering the cell, the filling port needs to be sealed. In the existing sealing process, initial sealing is performed with a sealing pin, then the residual electrolyte in and around the filling port is removed by means of manual cleaning and laser cleaning, and finally, the sealing pin is mounted, and laser welding is performed. However, it is difficult to thoroughly remove the residual electrolyte at the periphery of the filling port during filling, which will lead to defects such as welding burst points and pores.

The present application provides a battery case, a battery including such a case, and a power consuming device using the battery. Such a case is suitable for any batteries, such as battery modules and battery packs, or primary batteries and secondary batteries. For example, the secondary batteries include Ni-MH batteries, Ni-Cd batteries, lead acid batteries (or lead accumulators), lithium-ion batteries, sodium-ion batteries, polymer batteries, and the like. Such a battery is suitable for various power consuming devices using a battery, such as mobile phones, portable apparatuses, laptops, battery cars, electric toys, electric tools, electric vehicles, ships and spacecraft. For example, the spacecrafts include airplanes, rockets, space shuttles, space vehicles, etc.; and the battery is configured to provide electric energy for the power consuming device described above.

It should be understood that the technical solutions described in the embodiments of the present application are not only applicable to the battery and the power consuming device described above, but also applicable to all batteries each including a case and power consuming devices using batteries. However, for the brevity of description, in the following embodiments, the electric vehicle is used as an example for description.

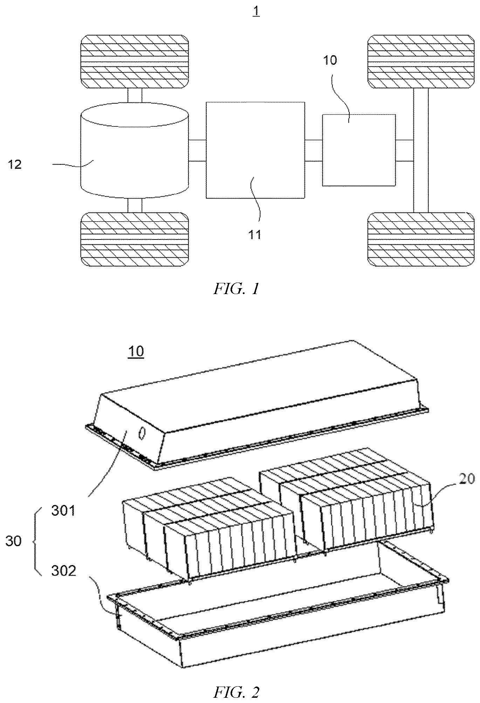

Referring to FIG. 1, FIG. 1 is a schematic structural diagram of a vehicle 1 according to some embodiments of the present application. The vehicle 1 may be a fuel vehicle, a gas vehicle, or a new energy vehicle. The new energy vehicle may be a battery electric vehicle, a hybrid electric vehicle, or an extended-range vehicle, etc. A battery 10 is provided inside the vehicle 1, and the battery 10 may be arranged at the bottom, the front or the back of the vehicle 1. The battery 10 may be configured to supply power to the vehicle 1. For example, the battery 10 may serve as a power supply for operating the vehicle 1. The vehicle 1 may further include a controller 11 and a motor 12. The controller 11 is configured to control the battery 10 to supply power to the motor 12, for example, to meet working power requirements during starting, navigation and traveling of the vehicle 1.

In some embodiments of the present application, the battery 10 can not only serve as a power supply for operating the vehicle 1, but also serve as a power supply for driving the vehicle 1, instead of or partially instead of fuel or natural gas, to provide driving power for the vehicle 1.

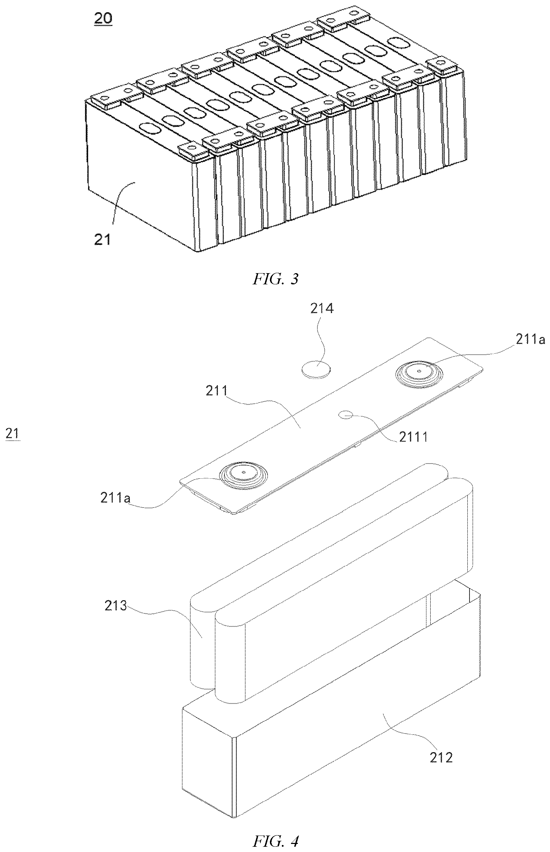

In order to satisfy different electricity requirements, the battery 10 may include a plurality of battery cells 21. The battery cell 21 refers to the minimum unit of a battery module or a battery pack. The plurality of battery cells 21 may be connected in series and/or in parallel via electrode terminals (corresponding to electrode terminals 211a in FIG. 4, and not shown in FIG. 1) for use in various application scenarios. The battery mentioned in the present application includes a battery module or a battery pack. The plurality of battery cells 21 may be connected in series or in parallel or in series-parallel. The series-parallel connection refers to a combination of serial connection and parallel connection. The battery 10 may also be referred to as a battery pack. In the embodiments of the present application, the plurality of battery cells 21 may directly form a battery pack, or may first form battery modules 20, and then the battery modules 20 may form a battery pack.

FIG. 2 shows a schematic structural diagram of a battery 10 according to an embodiment of the present application. In FIG. 2, the battery 10 may include a plurality of battery modules 20 and a case 30, the plurality of battery modules 20 being accommodated in the case 30. The case 30 is configured to accommodate the battery cells 21 or the battery modules 20, so as to prevent a liquid or other foreign objects from affecting charging or discharging of the battery cells 21. The case 30 may be of a simple three-dimensional structure such as an individual cuboid, cylinder or sphere, or of a complex three-dimensional structure composed of simple three-dimensional structures such as a cuboid, a cylinder or a sphere, which will not limited in the embodiments of the present application. The case 30 may be made of alloy such as aluminum alloy and iron alloy, or a polymer material such as polycarbonate and polyisocyanurate foam plastics, or a composite material such as glass fibers plus epoxy resin, which will not limited in the embodiments of the present application.

In some embodiments, the case 30 may include a first portion 301 and a second portion 302. The first portion 301 and the second portion 302 are fitted together in a covering manner, and the first portion 301 and the second portion 302 jointly define a space for accommodating the battery cells 21. The second portion 302 may be of a hollow structure with one end open, the first portion 301 may be of a plate-like structure, and the first portion 301 covers an open side of the second portion 302, so that the first portion 301 and the second portion 302 jointly define the space for accommodating the battery cells 21. The first portion 301 and the second portion 302 may also each be of a hollow structure with one side open, and the open side of the first portion 301 covers the open side of the second portion 302.

FIG. 3 shows a schematic structural diagram of a battery module 20 according to an embodiment of the present application. In FIG. 3, the battery module 20 may include a plurality of battery cells 21. The plurality of battery cells 21 may be first connected in series or in parallel or in series-parallel to form a battery module 20, and the plurality of battery modules 20 may be then connected in series or in parallel or in series-parallel to form a battery 10. In the present application, the battery cell 21 may include a lithium-ion battery cell, a sodium-ion battery cell, a magnesium-ion battery cell, etc., which will not limited in the embodiments of the present application. The battery cell 21 may be cylindrical, flat, cuboid or in another shape, which will not limited in the embodiments of the present application. The battery cells 21 generally include three types depending on the way of package: cylindrical battery cells 21, prismatic battery cells 21 and pouch battery cells 21, which will also not be limited in the embodiments of the present application. However, for the sake of brevity, the following embodiments will be described by taking the prismatic battery cells 21 as an example.

FIG. 4 is a schematic structural exploded view of a battery cell 21 according to some embodiments of the present application. The battery cell 21 refers to the minimum unit of the battery 10. As shown in FIG. 4, the battery cell 21 includes a cover plate 211, a shell 212, and a cell assembly 213.

The cover plate 211 refers to a component that covers an opening of the shell 212 to isolate an internal environment of the battery cell 21 from an external environment. Without limitation, the cover plate 211 may have a shape adapted to that of the shell 212 to fit with the shell 212. Optionally, the cover plate 211 may be made of a material (such as aluminum alloy) with certain hardness and strength, and thus the cover plate 211 is less prone to deformation when subjected to compression or collision, so that the battery cell 21 can have a higher structural strength, and the safety performance can also be improved. The cover plate 211 may be provided with functional components such as electrode terminals 211a. The electrode terminals 211a may be configured to be electrically connected to the cell assembly 213 for output or input of electric energy for the battery cell 21. In some embodiments, cover plate cover 211 may be further provided with a pressure relief mechanism configured for relieving internal pressure when the pressure or temperature inside the battery cell 21 reaches a threshold. The cover plate 211 may also be made of various materials, such as copper, iron, aluminum, stainless steel, an aluminum alloy, plastic, etc., which will not be particularly limited in the embodiments of the present application. In some embodiments, an insulating member may be further provided on an inner side of the cover plate 211. The insulating member may be configured to isolate electrical connection components within the shell 212 from the cover plate 211, so as to reduce the risk of short circuit. As an example, the insulating member may be made of plastic, rubber, etc.

The shell 212 is an assembly for fitting with the cover plate 211 to form the internal environment of the battery cell 21, wherein the formed internal environment may be used for accommodating the cell assembly 213, an electrolyte solution (not shown) and other components. The shell 212 and the cover plate 211 may be separate components, and the shell 212 may be provided with an opening, at which the cover plate 211 covers the opening to form the internal environment of the battery cell 21. Without limitation, the cover plate 211 and the shell 212 may also be integrated. Specifically, the cover plate 211 and the shell 212 can firstly form a common connection surface before other components are placed into the shell, and then the cover plate 211 covers the shell 212 when the interior of the shell 212 needs to be packaged. The shell 212 may have various shapes and various sizes, for example, in the form of a cuboid, a cylinder, a hexagonal prism, etc. Specifically, the shape of the shell 212 may be determined according to the specific shape and dimensions of the cell assembly 213. The shell 212 may be made of various materials, such as copper, iron, aluminum, stainless steel, an aluminum alloy, plastic, which will not particularly limited in the embodiments of the present application.

The cell assembly 213 is a component in the battery cell 21 where an electrochemical reaction takes place. The shell 212 may contain one or more cell assemblies 213. The cell assembly 213 is mainly formed by winding or stacking a positive electrode plate and a negative electrode plate, and a separator is usually provided between the positive electrode plate and the negative electrode plate. Parts of the positive electrode plate and the negative electrode plate that contain active substances form a body portion of the cell assembly, and parts of the positive electrode plate and the negative electrode plate that do not contain active substances each form a tab (not shown). A positive electrode tab and a negative electrode tab may be both located at one end of the body portion or respectively at two ends of the body portion. In charge and discharge processes of a battery 10, the positive active substance and the negative active substance react with the electrolyte, and the tabs are connected to the electrode terminals 211a such that a current loop is formed.

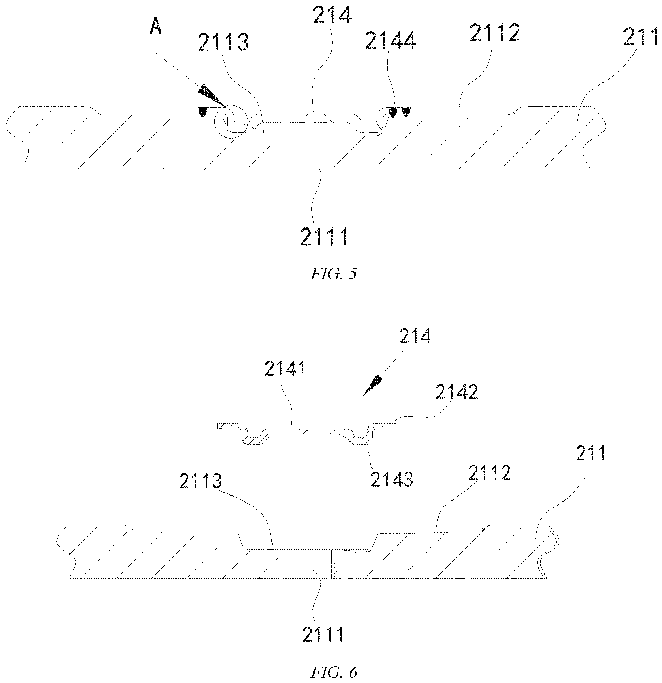

Referring to FIGS. 5 and 6, the present application provides a battery cover plate assembly, including a cover plate 211 and a sealing pin 214. The cover plate 211 is provided with a filling port 2111. The sealing pin 214 is configured to seal the filling port 2111.

The sealing pin 214 is configured to seal the filling port 2111, and the sealing pin 214 includes a main body portion 2141 and a welding portion 2142. The welding portion 2142 is located at a periphery of the main body portion 2141, and protrudes from the main body portion 2141 toward an outer circumferential side. The cover plate 211 is provided with a second recess 2113 and a first recess 2112, which are arranged from the inside to the outside at the periphery of the filling port 2111, the main body portion 2141 is located in the first recess 2112, and the welding portion 2142 is welded to a bottom surface of the first recess 2112.

The filling port 2111 penetrates the upper surface and the lower surface of the cover plate 211. The filling port 2111 may be a cylindrical hole, a tapered hole, or other structures.

The sealing pin 214 is configured to seal the filling port 2111 to prevent the electrolyte in the battery 10 from leaking from the filling port 2111. The main body portion 2141 and the welding portion 2142 of the sealing pin 214 may be integrally formed. In order to ensure the sealing effect of the sealing pin 214 during sealing, the sealing pin 214 is made of a weldable material. Optionally, the sealing pin 214 may be made of stainless steel or aluminum alloy. When the sealing pin 214 is pressed, the sealing pin 214 will deform to a certain extent. Therefore, the sealing pin 214 may also be made of an elastic material, can return to the original state after deformed, and is less prone to damage when being pressed. The sealing pin 214 may be made of plastic or rubber.

The height of the bottom surface of the first recess 2112 is greater than that of the bottom surface of the second recess 2113. The cross-sections of the first recess 2112 and the second recess 2113 may be circular, square or in other shapes. Optionally, the cross-sections of the first recess 2112 and the second recess 2113 are circular and have no dead corner, which facilitates removal of the residual electrolyte on the bottom surfaces of the recesses.

The second recess 2113 may be configured to accommodate the electrolyte, so as to reduce the residual electrolyte on the bottom surface of the first recess 2112. The bottom surface of the first recess 2112 is welded to the welding portion 2142 of the sealing pin 214, which prevents the sealing pin 214 from welding to the side wall of the filling port 2111, thereby improving the welding sealing performance between the sealing pin 214 and the filling port 2111.

In an optional embodiment, the diameter of the bottom surface of the first recess 2112 is greater than the diameter of the sealing pin 214.

As shown in FIG. 6, the first recess 2112 and the second recess 2113 have the filling port 2111 as the center of the circle, the diameter of the bottom surface of the first recess 2112 is the distance between two end points of the first recess 2112 in the radial direction of the filling port 2111 (i.e., the outer diameter of the first recess 2112). The larger the diameter of the bottom surface of the first recess 2112 is, the larger the weldable area, which facilitates the welding of the welding portion 2142 to the bottom surface of the first recess 2112, so as to avoid the affection on the welding quality due to the welding seam 2144 falling on the edge of the first recess 2112. The distance between the welding point, where the bottom surface of the first recess 2112 is welded to the welding portion 2142, and the side wall of the first recess 2112 should be set within a reasonable range, so that the heat during welding is not easily transferred to the region of the second recess 2113 where electrolyte is likely to leave residue, so as to prevent the electrolyte in the second recess 2113 from being heated to generate gas.

In an optional embodiment, the depth of the first recess 2112 is greater than the thickness of the welding portion 2142.

The depth of the first recess 2112 refers to the difference between the height of the bottom surface of the first recess 2112 and the height of the upper surface of the cover plate 211. During assembly, the bottom surface of the welding portion 2142 of the sealing pin 214 comes into contact with the bottom surface of the first recess 2112, and the height of the top of the welding portion 2142 is the height of the bottom surface of the first recess 2112 plus the thickness of the welding portion 2142. If the top of the welding portion 2142 is higher than the upper surface of the cover plate 211, the welding portion 2142 is more "protruding" relative to the upper surface of the cover plate 211 and is more likely to be impacted, so as to cause the sealing pin 214 to become loose and crack, thus affecting the sealing effect of the sealing pin 214. If the depth of the first recess 2112 is greater than the thickness of the welding portion 2142, the upper surface of the cover plate 211 is higher than the top of the welding portion 2142, and the upper surface of the cover plate 211 will receive the main impact force. In this way, the affection on the sealing pin 214 when being impacted is greatly reduced, thereby reducing the affection on the sealing performance.

In an optional embodiment, a buffer portion 2143 is provided between the main body portion 2141 and the welding portion 2142, and the buffer portion 2143 is arched in the thickness direction of the main body portion 2141.

The shape of the buffer portion 2143 is not limited and may be upwardly arched or downwardly arched. A lot of heat will be generated during the welding process of the sealing pin 214, so that the sealing pin 214 is heated to expand; and when the temperature of the sealing pin drops, the sealing pin 214 will shrink, so that the sealing pin 214 and the welding seam 2144 will generate great internal stress. The arched structure of the buffer portion 2143 can effectively absorb the stress that changes as the temperature changes during the welding process of the welding portion 2142, so as to prevent the sealing pin 214 and the welding seam 2144 from being broken due to excessive stress. The internal stress generated in the weldment during welding and the welding thermal process will cause changes in the shape and size of the weldment. At this time, the heat at the welding seam 2144 is quickly transferred to the sealing pin 214 via the welding portion 2142, and the sealing pin 214 is heated to expand the deform to a certain extent. After the welding is completed, the sealing pin 214 gradually cools down and begins to shrink, which easily causes rupture at the welding portion 2142. In order to eliminate and reduce the welding residual stress, the buffer portion 2143 is provided at the sealing pin 214, and the welding residual stress is absorbed by the buffer portion 2143. When the sealing pin 214 cools and shrinks, the bent part of the buffer portion 2143 deforms toward the welding portion 2142, which can alleviate the deformation of the welding portion 2142. Such an arrangement can effectively prevent the sealing pin 214 from cracking, so as to avoid the sealing failure of the sealing pin 214 due to the welding stress.

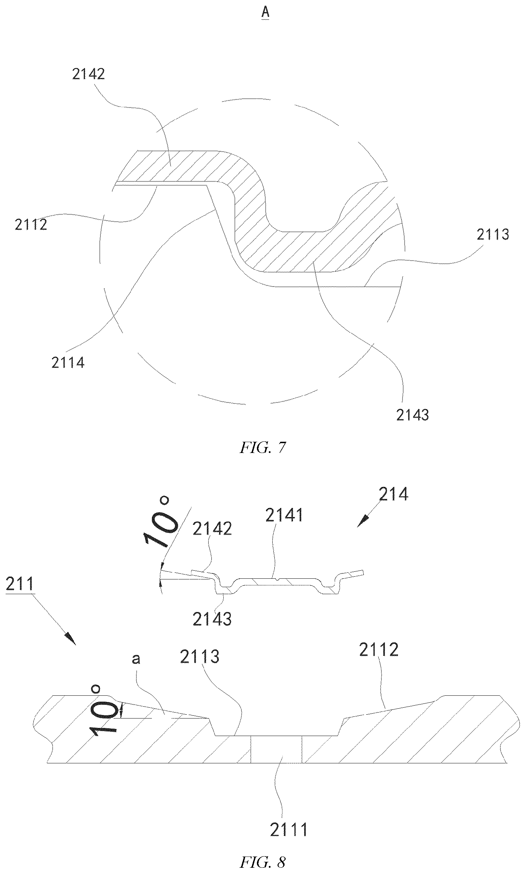

In an optional embodiment, as shown in FIG. 7, the buffer portion 2143 is arched from the main body portion 2141 toward the second recess 2113.

The buffer portion 2143 is arched toward the second recess 2113 and located in the second recess 2113, is engaged with the inner wall of the second recess 2113, and can achieve the limiting effect when the sealing pin 214 is aligned with the second recess 2113, which is convenient for the sealing pin 214 to quickly align with the second recess 2113 during mounting, thereby improving the production efficiency.

In an optional embodiment, the side wall of the second recess 2113 is an inclined surface, and the buffer portion 2143 has gaps from the inclined surface and the bottom surface of the second recess 2113.

Since the buffer portion 2143 has gaps from the inclined surface and the bottom surface of the second recess 2113, on the one hand, the gaps can relieve part of the stress when being impacted, so as to avoid interference with the buffer portion 2143; and on the other hand, providing the gaps can also reduce the air pressure in the closed space between the sealing pin 214 and the cover plate 211. The buffer portion 2143 having gaps from the inclined surface and the bottom surface of the second recess 2113 can ensure the welding portion 2142 to be in effective contact with the bottom surface of the first recess 2112, and is also conducive to discharge of the vapor generated by the electrolyte during welding to the outside via the gaps, so as to avoid the influence of the waste gas on the welding to prevent the occurrence of false welding of the welding seam 2144, thereby ensuring the welding sealing performance of the sealing pin 214. The gap that is too small will not be sufficient to relieve the welding stress, and the gap that is too large will affect the welding. Therefore, the size of the gap needs to be defined.

In an optional embodiment, more than one welding seam 2144 is welded between the welding portion 2142 and the welding surface.

The welding seam 2144 is the joint formed at the welding part after welding. Considering that poor welding is easily caused by various factors during the welding process, in order to avoid poor welding sealing performance when one welding is provided, the space for more than two welding seams 2144 in width is reserved at the welding portion 2142. If poor welding occurs at one welding seam 2144, a further welding seam 2144 can be provided for repair welding on the inner side. That is to say, the welding portion 2142 may include two situations, one is that there is only one welding seam 2144 on the welding portion 2142, and the other is that there are two welding seams 2144 on the welding portion 2142. Providing more than two welding seams 2144 can improve the welding sealing performance between the sealing pin 214 and the filling port 2111.

In an optional embodiment, the bottom surface of the first recess 2112 is a horizontal surface or an inclined surface. The bottom surface of the first recess 2112 is attached to the bottom surface of the welding portion 2142, and the welding operation needs to be performed on the bottom surface of the first recess 2112. The welding can be operated when the bottom surface of the first recess 2112 is a horizontal surface or an inclined surface. The horizontal surface has no dead corner to be cleaned and is thus easier to clean and has less residual electrolyte, which can avoid the affection on the welding quality due to the residual electrolyte absorbing the heat and generating gas during welding. The inclined surface refers to a surface that forms a certain angle with respect to the horizontal plane. In some other embodiments, the bottom surface of the first recess 2112 is an inclined surface which is inclined from high to low toward the filling port 2111, and the bottom surface of the welding portion 2142 is attached to the inclined surface.

With this arrangement, part of the liquid metal and molten metal will flow toward the filling port 2111, resulting in a larger welding area.

In an optional embodiment, the angle of the bottom surface of the first recess 2112 with respect to the horizontal plane is 0° to 10°. As shown in FIG. 8, A is an angle of the bottom surface of the first recess 2112 with respect to the horizontal plane. In this case, the angle A of the bottom surface of the first recess 2112 with respect to the horizontal plane is 10°. Accordingly, the angle of the bottom surface of the welding portion 2142 with respect to the horizontal plane is also 10°. In general, the angle between a welding rod and the weldment will affect the welding quality to a certain extent. During welding of the bottom surface of the first recess 2112 and the bottom surface of the welding portion 2142 of the sealing pin 214, allowing the bottom surface of the first recess 2112 to be nearly level facilitates controlling the welding angle, so as to control the temperature of the weld pool, which can achieve a flat shape after welding and also avoid the formation of weld beading or heaviness. Compared with welding on the inclined surface, the liquid slag and metal on the horizontal surface are not easy to flow, so that it is easy to control the shape and size of the welding seam 2144 to achieve good appearance and high quality. In addition, welding on a horizontal surface allows for larger currents and higher work efficiency. A larger weld pool may be formed during welding, and in the weld pool, the slag melt and the liquid metal react uniformly, which can produce a good crystal structure.

In the specific operation process, after the secondary filling of cells and the insertion of plastic pins, the residual electrolyte around the filling port 2111 is firstly removed with paper tape, and the filling port 2111 is further cleaned by means of laser. The plastic pins are inserted. At this time, since the welding portion 2142 is away from the heavily contaminated region at the bevel, pinholes and burst points can be reduced theoretically.

When a welding defect occurs in the main welding seam, the welding track may be reduced, and an alternative welding seam may be formed in the inner circle of the first recess 2112. Providing the alternative welding seam can achieve good sealing, thereby improving the welding yield. If the main welding seam has good welding quality, there is no need to provide the alternative welding seam.

Finally, it should be noted that the above embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some or all of the technical features thereof may be equivalently substituted; and such modifications or substitutions do not make the essence of the corresponding technical solution depart from the scope of the technical solutions of the embodiments of the present application, and should fall within the scope of the claims and the description of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A battery cover plate assembly, comprising:
a cover plate provided with a filling port; and
a sealing pin for sealing the filling port;
wherein the sealing pin comprises a main body portion and a welding portion, and the welding portion is located at a periphery of the main body portion and extends from the main body portion toward an outer circumferential side; and the cover plate is provided with a second recess and a first recess, which are sequentially arranged from the inside to the outside at a periphery of the filling port, the main body portion is located in the second recess, and the welding portion is welded to a bottom surface of the first recess.

2. The battery cover plate assembly according to claim 1, wherein the height of the bottom surface of the first recess is greater than that of the bottom surface of the second recess.

3. The battery cover plate assembly according to claim 1, wherein the cross-sections of the first recess and the second recess are circular in shape.

4. The battery cover plate assembly according to claim 1, wherein the diameter of the bottom surface of the first recess is greater than the diameter of the sealing pin.

5. The battery cover plate assembly according to any one of claims 1 to 4, wherein the depth of the first recess is greater than the thickness of the welding portion.

6. The battery cover plate assembly according to any one of claims 1 to 4, wherein a buffer portion is provided between the main body portion and the welding portion, and the buffer portion is arched in a thickness direction of the main body portion.

7. The battery cover plate assembly according to claim 6, wherein the buffer portion is arched from the main body portion toward the second recess.

8. The battery cover plate assembly according to claim 6, wherein a side wall of the second recess is an inclined surface, and the buffer portion has gaps from the inclined surface and a bottom surface of the second recess.

9. The battery cover plate assembly according to any one of claims 1 to 4, wherein one or more welding seams are welded between the welding portion and the bottom surface of the first recess.

10. The battery cover plate assembly according to any one of claims 1 to 9, wherein the bottom surface of the first recess is a flat surface; or
the bottom surface of the first recess is an inclined surface, the inclined surface is inclined from high to low toward the filling port, and the bottom surface of the welding portion is attached to the inclined surface.

11. The battery cover plate assembly according to claim 10, wherein an angle of the bottom surface of the first recess with respect to the horizontal plane is 0° to 10°.

12. A battery cell, comprising:
a shell;
an electrode assembly arranged in the shell; and
a cover plate assembly, which is the battery cover plate assembly of any one of claims 1 to 11 and is connected to the shell in a sealing manner.

13. A battery, comprising:
a battery cell of claim 12; and
a case configured to accommodate the battery cell.

14. A power consuming device, comprising a battery of claim 13 for supplying electric energy.
